# EUROPEAN PATENT SPECIFICATION

(11) **EP 3 489 813 B1**
(45) Date of publication and mention of the grant of the patent: **05.03.2025**
(21) Application number: 17834594.8
(22) Date of filing: 16.03.2017
(51) Int. Cl.: G06F 3/0488, G06F 3/048

(54) **ELECTRONIC DEVICE AND OPERATING METHOD THEREFOR**
ELEKTRONISCHE VORRICHTUNG UND BETRIEBSVERFAHREN DAFÜR
DISPOSITIF ÉLECTRONIQUE ET SON PROCÉDÉ DE FONCTIONNEMENT

(30) Priority: 28.07.2016 KR 20160096064
(43) Date of publication of application: 29.05.2019
(73) Proprietor: Samsung Electronics Co., Ltd., Suwon-si, Gyeonggi-do 16677 (KR)
(72) Inventor: LEE, Hye-Jin, Seoul 06262 (KR); KANG, Donggoo, Seoul 06587 (KR); KIM, Changwon, Suwon-si Gyeonggi-do 16518 (KR); KIM, Hyunkyung, Seoul 06767 (KR); PARK, Joohee, Goyang-si, Gyeonggi-do 10240 (KR); YOO, Seon Woo, Seoul 06630 (KR); LEE, Sangah, Suwon-si Gyeonggi-do 16700 (KR); LIM, Eunyoung, Seoul 06616 (KR); CHOI, Bokun, Seoul 08090 (KR)
(74) Representative: HGF
(86) International application number: PCT/KR2017/002825
(87) International publication number: WO 2018/021649

(56) References cited:
- WO-A1-2013/169870
- KR-A- 20100 010 219
- KR-A- 20130 043 292
- KR-A- 20150 009 018
- US-A1- 2013 257 769
- US-A1- 2013 307 809
- US-A1- 2013 328 803
- US-A1- 2014 002 355
- US-A1- 2015 261 330
- US-A1- 2015 268 725
- US-B1- 9 030 419

## Description

### Technical Field

The present disclosure relates to an apparatus and a method for controlling a function of an electronic device on the basis of the intensity of a pressure input in the electronic device.

### Background Art

As the use of multimedia services using electronic devices increases, the amount of information to be processed and to be displayed in electronic devices is increasing. Accordingly, there is growing interest in an electronic device having a touchscreen, in which the size of a display is increased by improving space utilization.

A touchscreen enables the input and display of information on a single screen. For example, an electronic device may sense a user's touch input through a touchscreen and may display the result of executing a control command on the touchscreen while performing the control command according to the touch input.

WO 2013/169870 A1 discloses an electronic device that displays a user interface in a first display state. The device detects a first portion of a gesture on a touch-sensitive surface, including detecting intensity of a respective contact of the gesture. In response to detecting the first portion of the gesture, the device displays an intermediate display state between the first display state and a second display state. In response to detecting the end of the gesture: if intensity of the respective contact had reached a predefined intensity threshold prior to the end of the gesture, the device displays the second display state; otherwise, the device redisplays the first display state. After displaying an animated transition between a first display state and a second state, the device, optionally, detects an increase of the contact intensity. In response, the device displays a continuation of the animation in accordance with the increasing intensity of the respective contact.

US 2013/257769 A1 discloses devices and methods that facilitate improved input device performance. Specifically, the devices and methods provide an input device configured to determine positional and force information for input objects interacting with a sensing region. The system is configured to detect a variable force imparted to an input surface of the sensing region by at least one input object. The variable force dynamically modulates, within a modulation range, a user interface parameter. The dynamic modulation of the interface parameter is modified in response to an additional input object contacting the input surface.

US 2015/268725 A1 discloses systems and methods for force-based object manipulation and haptic sensations. One disclosed method includes the steps of receiving a first signal indicating a location of a user interaction and receiving a second signal indicating a first force. The method also includes, if the location of the user interaction corresponds to an object displayed on a display screen: outputting a first haptic signal to a haptic output device to cause a first haptic effect; and outputting a second haptic signal to the haptic output device to cause a second haptic effect if the first force meets or exceeds a first force threshold.

### Disclosure of Invention

### Technical Problem

The foregoing electronic device may perform a control command corresponding to a touch input detected through the touchscreen, thus providing only limited events but making it difficult to provide various events.

An electronic device and a method according to various embodiments of the present disclosure may provide various functions on the basis of the intensity of a pressure input.

An electronic device and a method according to various embodiments of the present disclosure may control a function of the electronic device using a configuration of a content file corresponding to the intensity of a pressure input.

### Solution to Problem

The invention is defined by the independent claims. Further aspects of the invention are outlined by the dependent claims. When the term "embodiment" is used for describing an unclaimed combination of features, it has to be understood as referring to examples useful for understanding the present invention.

### Advantageous Effects of Invention

An electronic device and an operating method thereof according to various embodiments of the present disclosure may control a function of the electronic device on the basis of a configuration of a content file corresponding to the intensity of a pressure input, thus enabling a user to invoke various functions merely by controlling pressure intensity. Further, information on a configuration obtained according to pressure intensity may be provided, thus enabling the user to easily control the intensity of the pressure input.

### Brief Description of Drawings

FIG. 1A illustrates an electronic device in a network environment according to various embodiments;
FIG. 1B is a block diagram illustrating a processor according to various embodiments of the present disclosure;
FIG. 2 is a block diagram illustrating an electronic device according to various embodiments of the present disclosure;
FIG. 3 is a block diagram illustrating a program module according to various embodiments of the present disclosure;
FIG. 4A is a flowchart illustrating a function control operation of an electronic device according to various embodiments of the present disclosure;
FIGS. 4B, 5A, 5B, 6A, 6B, 7A, 7B, 8A, and 8B illustrate a function control operation according to various embodiments of the present disclosure;
FIG. 9 is a flowchart illustrating a pressure intensity measurement operation of an electronic device according to various embodiments of the present disclosure;
FIGS. 10A, 10B, and 10C illustrate a pressure intensity measurement operation according to various embodiments of the present disclosure;
FIG. 11 is a flowchart illustrating an operation of an electronic device obtaining the configuration of a content file according to various embodiments of the present disclosure;
FIGS. 12A and 12B illustrate an operation of obtaining the configuration of a content file according to various embodiments of the present disclosure;
FIG. 13 is a flowchart illustrating a function control operation of an electronic device according to various embodiments of the present disclosure; and
FIGS. 14A and 14B illustrate a function control operation of an electronic device 101 according to various embodiments of the present disclosure.

### Best Mode for Carrying out the Invention

Hereinafter, various embodiments of the present document are mentioned below with reference to the accompanying drawings. An embodiment and the terms used in this do not intend to limit the technology mentioned in the present document to a specific embodiment form, and should be construed as including various changes of the corresponding embodiment, equivalents thereof, and/or alternatives thereof. In the drawings, like reference symbols may denote like constituent elements. The expression of a singular form may include the expression of a plural form unless otherwise dictating clearly in context. In the present document, the expressions "A or B", "at least one of A and/or B", etc. may include all available combinations of words enumerated together. The expressions "1st", "2nd", "first", "second", etc. may modify corresponding constituent elements irrespective of order and/or importance, and are just used to distinguish one constituent element from another constituent element and do not limit the corresponding constituent elements. When it is mentioned that any (e.g., 1st) constituent element is "(operatively or communicatively) coupled with/to" or is "connected to" another (e.g., 2nd) constituent element, the any constituent element may be directly coupled to the another constituent element, or be coupled through a further constituent element (e.g., a third constituent element).

The expression "configured (or set) to~" used in the present document may be used interchangeably with, for example, "suitable for~", "having the capacity to~", "designed to~", "adapted to~", "made to~", or "capable of~" in a hardware or software manner in accordance to circumstances. In any situation, the expression "device configured to~" may represent that the device is "capable of ~" together with other devices or components. For example, the phrase "processor configured (or set) to perform A, B and C" may represent an exclusive processor (e.g., embedded processor) for performing a corresponding operation, or a generic-purpose processor (e.g., a central processing unit (CPU) or an application processor (AP)) capable of performing corresponding operations by executing one or more software programs stored in a memory device.

An electronic device according to various embodiments of the present document may, for example, include at least one of a smartphone, a tablet personal computer (PC), a mobile phone, a video phone, an electronic book reader, a desktop PC, a laptop PC, a netbook computer, a workstation, a server, a portable digital assistant (PDA), a portable multimedia player (PMP), an MPEG-1 audio layer-3 (MP3) player, a medical device, a camera or a wearable device. The wearable device may include at least one of an accessory type (e.g., a watch, a ring, a wristlet, an anklet, a necklace, glasses, a contact lens or a head-mounted-device (HMD)), a fabric or clothing integrated type (e.g., electronic clothes), a human-body mount type (e.g., a skin pad or tattoo) or a bio implantation type (e.g., an implantable circuit). According to certain embodiment, the electronic device may, for example, include at least one of a television (TV), a digital versatile disc (DVD) player, an audio system, a refrigerator, an air conditioner, a cleaner, an oven, a microwave, a washing machine, an air cleaner, a set-top box, a home automation control panel, a security control panel, a media box (for example, Samsung HomeSyncTM, Apple TVTM or Google TVTM), a game console (e.g., XboxTM or PlayStationTM), an electronic dictionary, an electronic locking system, a camcorder or an electronic frame.

In another embodiment, the electronic device may include at least one of various medical devices (e.g., various portable medical measurement devices (e.g., a blood glucose sensor, a heat rate sensor, a blood pressure monitor, a body temperature meter, etc.), magnetic resonance angiography (MRA), magnetic resonance imaging (MRI), computed tomography (CT), a imaging equipment, an ultrasonic instrument, etc.)), a navigation device, a global navigation satellite system (GNSS), an event data recorder (EDR), a flight data recorder (FDR), a car infotainment device, an electronic equipment for ship **(e.g.,** a vessel navigation device, a gyro compass, etc.), avionics, a security device, a car head unit, an industrial or domestic robot, a drone, an automatic teller's machine (ATM) of a financial institution, point of sales (POS) of shops, an internet of things (IoT) device (e.g., an electric bulb, various sensors, a sprinkler device, a fire alarm, a thermostat, a streetlight, a toaster, an exerciser, a hot water tank, a heater, a boiler, etc.).
According to certain embodiment, the electronic device may include at least one of a part of furniture, a building/structure or a car, an electronic board, an electronic signature receiving device, a projector or various metering devices (e.g., tap water, electricity, gas, radio wave metering devices or the like). In various embodiments, the electronic device may be flexible, or be a combination of two or more of the aforementioned various devices. The electronic device according to an embodiment of the present document is not limited to the aforementioned devices. In the present document, the term 'user' may denote a person who uses the electronic device or a device (e.g., an artificial-intelligent electronic device) which uses the electronic device.

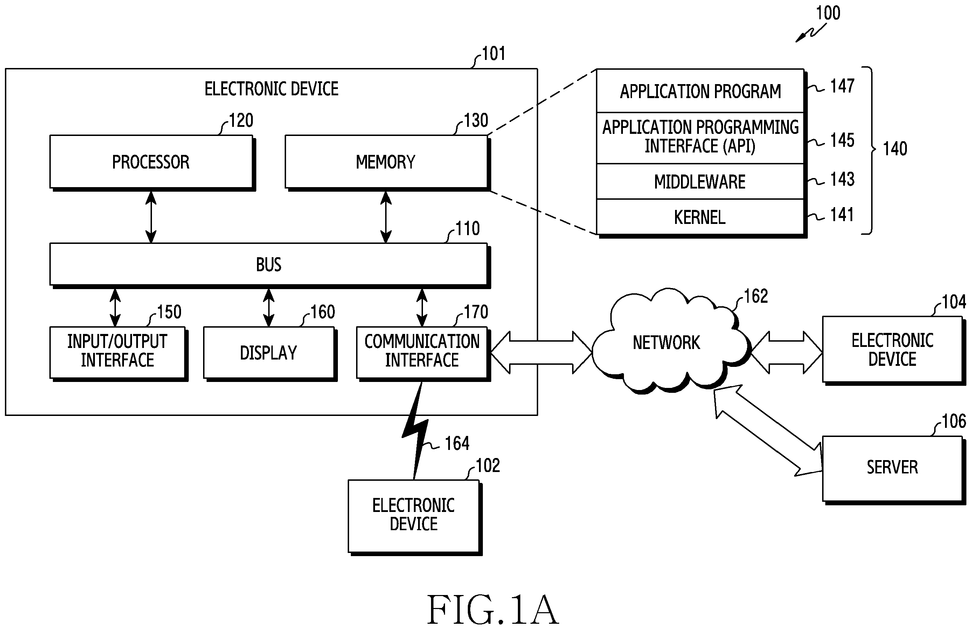

FIG. 1A illustrates a block diagram of a network environment system according to an embodiment of the present disclosure.

Referring to FIG. 1A, an electronic device 101 within a network environment 100 in various embodiments is described. The electronic device 101 may include a bus 110, a processor 120, a memory 130, an input output interface 150, a display 160, and a communication interface 170. In some embodiment, the electronic device 101 may omit at least one of the constituent elements or additionally have another constituent element.

The bus 110 may, for example, include a circuit coupling the constituent elements 110, 120, 150, 160 and 170 with one another and forwarding communication (e.g., a control message or data) between the constituent elements.

The processor 120 may include one or more of a central processing unit (CPU), an application processor (AP) or a communication processor (CP). The processor 120 may, for example, execute operation or data processing for control and/or communication of at least one another constituent element of the electronic device 101.

According to one embodiment, the processor 120 may control a function of the electronic device 101 on the basis of a configuration of a content file corresponding to the intensity of pressure generated by an input. For example, the processor 120 may execute a function associated with a first configuration of the content file when sensing an input having a pressure intensity within a first reference range. In another example, the processor 120 may execute a function associated with a second configuration of the content file when sensing an input having a pressure intensity within a second reference range. For instance, the first configuration and the second configuration are different types of data, wherein the first configuration is content data (e.g., image data and video data) included in the content file, and the second configuration may be additional data (e.g., metadata) included in the content file. In still another example, the processor 120 may execute a function associated with a first configuration of the content file when sensing an input having a pressure intensity within a first reference range, and may execute a function associated with a combination of the first configuration and a second configuration of the content file when sensing an input having a pressure intensity within a second reference range.

The memory 130 may include a volatile and/or non-volatile memory. The memory 130 may, for example, store a command or data related to at least one another constituent element of the electronic device 101. According to one embodiment, the memory 130 may store at least one reference value for measuring the intensity of pressure by an input. For example, the memory may store a pressure intensity corresponding to a first reference range for determining an input to obtain first configuration data of a content file, a pressure intensity corresponding to a second reference range for determining an input to obtain second configuration data of the content file, and the like.

According to an embodiment, the memory 130 may store a software and/or program 140. The program 140 may, for example, include a kernel 141, a middleware 143, an application programming interface (API) 145, an application program (or "application") 147, and the like. At least some of the kernel 141, the middleware 143 or the API 145 may be called an operating system (OS).

The kernel 141 may, for example, control or manage system resources (e.g., bus 110, processor 120, memory 130, and the like) that are used for executing operations or functions implemented in other programs (e.g., middleware 143, API 145 or application program 147). Also, the kernel 141 may provide an interface through which the middleware 143, the API 145 or the application program 147 may control or manage the system resources of the electronic device 101 by accessing the individual constituent element of the electronic device 101.

The middleware 143 may, for example, perform a relay role of enabling the API 145 or the application program 147 to communicate and exchange data with the kernel 141. Also, the middleware 143 may process one or more work requests that are received from the application program 147, in accordance with priority. For example, the middleware 143 may grant priority capable of using the system resources (e.g., the bus 110, the processor 120, the memory 130 or the like) of the electronic device 101 to at least one of the application programs 147, and process one or more work requests.

The API 145 is, for example, an interface enabling the application program 147 to control a function provided by the kernel 141 or the middleware 143 and may, for example, include at least one interface or function (e.g., an instruction) for file control, window control, image processing, character control or the like.

The input output interface 150 may forward a command or data inputted from a user or another external device, to another constituent element(s) of the electronic device 101, or output a command or data received from the another constituent element(s) of the electronic device 101, to the user or another external device.

The display 160 may, for example, include a liquid crystal display (LCD), a light emitting diode (LED) display, an organic light emitting diode (OLED) display, a microelectromechanical systems (MEMS) display or an electronic paper display. The display 160 may, for example, display various contents (e.g., a text, an image, a video, an icon, a symbol and/or the like) to a user. The display 160 may include a touch screen. And, for example, the display 160 may receive a touch, gesture, proximity or hovering input that uses an electronic pen or a part of the user's body. According to one embodiment, the display may output a content file selected by an input.

The communication interface 170 may, for example, establish communication between the electronic device 101 and an external device (e.g., the first external electronic device 102, the second external electronic device 104 or the server 106). For example, the communication interface 170 may be coupled to a network 162 through wireless communication or wired communication, to communicate with the external device (e.g., the second external electronic device 104 or the server 106). The wireless communication may, for example, include a cellular communication that uses at least one of long term evolution (LTE), LTE-advanced (LTE-A), code division multiple access (CDMA), wideband CDMA (WCDMA), universal mobile telecommunications system (UMTS), wireless broadband (WiBro), global system for mobile communications (GSM) and the like. According to an embodiment, the wireless communication may, for example, include at least one of wireless fidelity (WiFi), Bluetooth (BT), Bluetooth low energy (BLE), Zigbee, near field communication (NFC), magnetic secure transmission (MST), radio frequency (RF) or body area network (BAN). According to an embodiment, the wireless communication may include GNSS. The GNSS may, for example, be a global positioning system (GPS), a global navigation satellite system (Glonass), Beidou navigation satellite system (hereinafter, "Beidou")) or Galileo, the European global satellite-based navigation system. Hereinafter, the "GPS" may be used interchangeably with the "GNSS". The wired communication may, for example, include at least one of a universal serial bus (USB), a high definition multimedia interface (HDMI), a recommended standard-232 (RS-232), power line communication (PLC), a plain old telephone service (POTS), and the like.

The network 162 may include at least one of a telecommunications network, for example, a computer network (e.g., local area network (LAN) or wide area network (WAN)), the Internet or a telephone network.

Each of the first and second electronic devices 102 and 104 may be a device of the same or different type from that of the electronic device 101. According to various embodiments, all or some of operations executed in the electronic device 101 may be executed in another one electronic device or a plurality of electronic devices (e.g., the electronic devices 102 and 104 or the server 106). According to an embodiment, where the electronic device 101 performs some function or service automatically or in response to a request, the electronic device 101 may, instead of or additionally to executing the function or service in itself, send a request for execution of at least a partial function associated with this to another device (e.g., electronic device 102, 104 or server 106). The another electronic device (e.g., electronic device 102, 104 or server 106) may execute the requested function or additional function, and forward the execution result to the electronic device 101. The electronic device 101 may process the received result as it is or additionally, to provide the requested function or service. For this, a cloud computing, distributed computing or client-server computing technology may be used, for example.

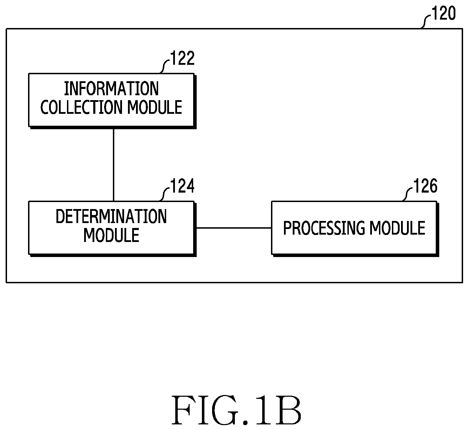

FIG. 1B is a block diagram illustrating a processor 120 according to various embodiments of the present disclosure.

Referring to FIG. 1B, the processor 120 may include an information collection module 122, a determination module 124, and a processing module 126.

According to one embodiment, the information collection module 122 may collect sensor information on an input applied to at least one sensor. For example, the information collection module 122 may collect sensor information from a sensor capable of recognizing pressure (or force). Specifically, the information collection module 122 may collect information associated with at least one of pressure intensity (strength), pressure retention time, and the coordinates at which pressure is sensed. When collecting sensor information associated with pressure, the information collection module 122 may provide the collected sensor information to the determination module 124.

According to one embodiment, the determination module 124 may determine, based at least partly on sensor information obtained by the information collection module 122, that an input to obtain at least some of a configuration of a content file is sensed. For example, the determination module 124 may determine, based on the sensor information input from the information collection module 122, whether the intensity of pressure applied to an area where an input is sensed is within at least one reference range. Specifically, when determining that pressure having intensity within a first reference range is applied, the determination module 124 may determine that an input to obtain a first configuration of a content file (e.g., image data and video data of a content file) is sensed. In another example, the determination module 124 may determine whether an input to obtain at least one configuration from a content file is sensed using various pieces of sensor information (e.g., pressure retention time and touch input area) in addition to the intensity of pressure.

When the determination module 124 determines that pressure within the at least one reference range (e.g., the first reference range) is applied, the determination module 124 may determine whether the measured pressure is changed using the sensor information. For example, the determination module 124 may determine whether pressure having intensity out of the first reference range is applied. Pressure intensity that is out of the first reference range may include changed pressure intensity that is within another reference range (e.g., a second reference range). When it is determined that the pressure having the intensity out of the first reference range is applied, the determination module 124 may determine that an input to obtain a second configuration (e.g., metadata) of the content file is sensed. The determination module 124 may provide the result of determining the input to the processing module 126.

According to one embodiment, the processing module 126 may obtain a configuration of content corresponding to a determination result from the determination module 124. For example, when it is determined that pressure having intensity within a first reference range is applied, the processing module 126 may obtain a first configuration of a content file. In another example, when it is determined that pressure having intensity out of the first reference range is applied, the processing module 126 may obtain a second configuration of the content file. The content file may be, for example, an image file including image data output on a screen and metadata added by the electronic device 101. In this content file, the processing module 126 may obtain, as the first configuration, at least a portion of the image data having a predetermined size based on an area where the pressure or input is sensed. Further, the processing module 126 may obtain at least a portion of the metadata as the second configuration.

The processing module 126 may control a function of the electronic device 101 using the obtained configurations of the content file.

For example, when the first configuration is obtained from the content file, the processing module 126 may generate a control command to execute a function associated with the first configuration. For example, when user-identifiable information (e.g., a face, name, or telephone number) is obtained from the image data obtained as the first configuration, the processing module 126 may generate a control command to execute a function enabling connection to an identified user (e.g., an e-mail function, a message function, or a dialing function).

In another example, when the second configuration is obtained from the content file, the processing module 126 may generate a control command to execute a function associated with the second configuration. For example, when photographed location-identifiable information (e.g., location information) is obtained from the metadata obtained as the second configuration, the processing module may generate a control command to execute a function of searching for an identified location (e.g., a web function or a map search function).

In still another example, when the first configuration and the second configuration are obtained from the content file, the processing module 126 may generate a control command to execute a function associated with a combination of the first configuration and the second configuration. For example, when user-identifiable information (e.g., a face, name, or telephone number) is obtained from the image data (obtained as the first configuration) and photographed location-identifiable information (e.g., location information) is obtained from the metadata (obtained as the second configuration), the processing module 126 may generate a control command to execute a function of recording an identified user and an identified location (e.g., a memo function, a diary function, or a social networking function).

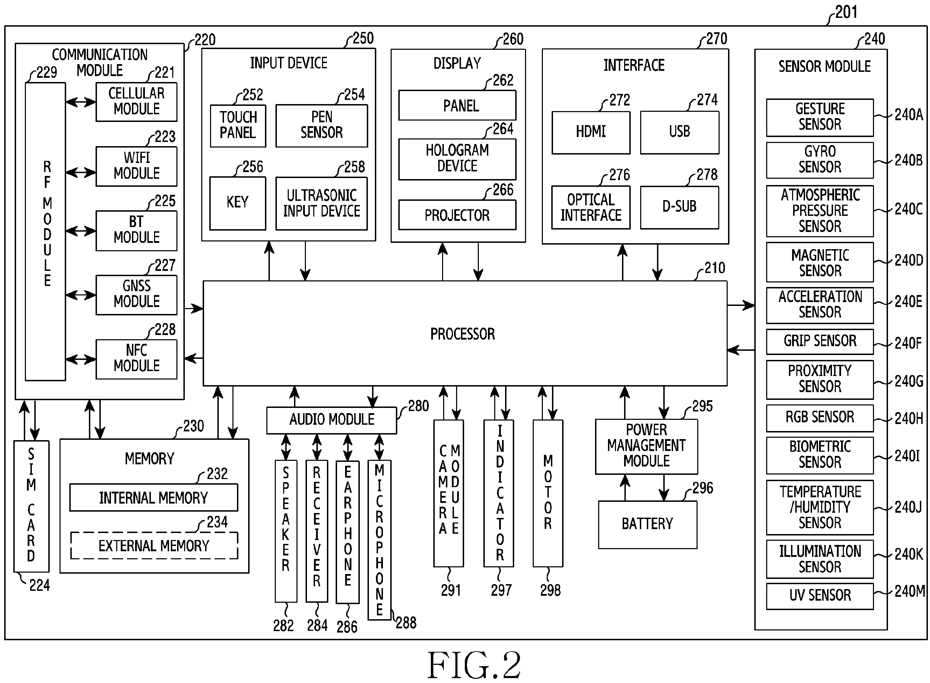

FIG. 2 illustrates a block diagram of an electronic device according to an embodiment of the present disclosure.

Referring to FIG. 2, an electronic device 201 may, for example, include the entire or part of the electronic device 101 illustrated in FIG. 1A. The electronic device 201 may include one or more processors (e.g., application processor (APs)) 210, a communication module 220, a subscriber identification module 224, a memory 230, a sensor module 240, an input device 250, a display 260, an interface 270, an audio module 280, a camera module 291, a power management module 295, a battery 296, an indicator 297 and a motor 298.

The processor 210 may, for example, drive an operating system or an application program to control a majority of hardware or software constituent elements coupled to the processor 210, and may perform various data processing and operations. The processor 210 may be, for example, implemented as a system on chip (SoC). According to an embodiment, the processor 210 may further include a graphic processing unit (GPU) and/or an image signal processor (ISP).

The processor 210 may include at least some (e.g., cellular module 221) of the constituent elements illustrated in FIG. 2 as well. The processor 210 may load a command or data received from at least one of the other constituent elements (e.g., non-volatile memory), to a volatile memory, to process the loaded command or data, and store the result data in the non-volatile memory.

The communication module 220 may, for example, have the same or similar construction with the communication interface 170. The communication module 220 may, for example, include a cellular module 221, a WiFi module 223, a Bluetooth module 225, a GNSS module 227, a near field communication (NFC) module 228, and a radio frequency (RF) module 229. The cellular module 221 may, for example, provide voice telephony, video telephony, a text service, an Internet service or the like through a telecommunication network. According to an embodiment, the cellular module 221 may perform the distinction and authentication of the electronic device 201 within the telecommunication network, by using the subscriber identification module (e.g., SIM card) 224. According to an embodiment, the cellular module 221 may perform at least some functions among functions that the processor 210 may provide. According to an embodiment, the cellular module 221 may include a communication processor (CP). According to some embodiment, at least some (e.g., two or more) of the cellular module 221, the WiFi module 223, the Bluetooth module 225, the GNSS module 227 or the NFC module 228 may be included within one integrated chip (IC) or IC package. The RF module 229 may, for example, transceive a communication signal (e.g., RF signal). The RF module 229 may, for example, include a transceiver, a power amplifier module (PAM), a frequency filter, a low noise amplifier (LNA), an antenna or the like. According to another embodiment, at least one of the cellular module 221, the WiFi module 223, the Bluetooth module 225, the GNSS module 227 or the NFC module 228 may transceive an RF signal through a separate RF module.

The subscriber identification module 224 may, for example, include a card including a subscriber identification module and/or an embedded SIM. And, the subscriber identification module 224 may include unique identification information (e.g., integrated circuit card identifier (ICCID)) or subscriber information (e.g., international mobile subscriber identity (IMSI)).

The memory 230 (e.g., memory 130) may, for example, include an internal memory 232 or an external memory 234. The internal memory 232 may, for example, include at least one of a volatile memory (e.g., a dynamic random access memory (DRAM), a static RAM (SRAM), a synchronous dynamic RAM (SDRAM) or the like) and a non-volatile memory (e.g., one time programmable read only memory (OTPROM), a programmable ROM (PROM), an erasable PROM (EPROM), an electrically EPROM (EEPROM), a mask ROM, a flash ROM, a flash memory, a hard drive or a solid state drive (SSD)). The external memory 234 may include a flash drive, for example, a compact flash (CF), a secure digital (SD), a micro-SD, a mini-SD, an extreme Digital (xD), a Multi Media Card (MMC), a memory stick or the like. The external memory 234 may be operatively or physically coupled with the electronic device 201 through various interfaces.

The sensor module 240 may, for example, measure a physical quantity or sense an activation state of the electronic device 201, to convert measured or sensed information into an electrical signal. The sensor module 240 may, for example, include at least one of a gesture sensor 240A, a gyro sensor 240B, a barometer 240C, a magnetic sensor 240D, an acceleration sensor 240E, a grip sensor 240F, a proximity sensor 240G, a color sensor 240H (e.g., a red, green, blue (RGB) sensor), a biometric (medical) sensor 240I, a temperature/humidity sensor 240J, an ambient light (illuminance) sensor 240K or an ultra violet (UV) sensor 240M. Additionally or alternatively, the sensor module 240 may, for example, include an E-nose sensor, an electromyography (EMG) sensor, an electroencephalogram (EEG) sensor, an electrocardiogram (ECG) sensor, an infrared (IR) sensor, an iris scan sensor and/or a finger scan sensor. The sensor module 240 may further include a control circuit for controlling at least one or more sensors belonging therein. In some embodiment, the electronic device 201 may further include a processor configured to control the sensor module 240 as a part of the processor 210 or separately, thereby controlling the sensor module 240 while the processor 210 is in a sleep state.

The input device 250 may, for example, include a touch panel 252, a (digital) pen sensor 254, a key 256 or an ultrasonic input device 258. The touch panel 252 may, for example, use at least one scheme among a capacitive overlay scheme, a pressure sensitive scheme, an infrared beam scheme or an ultrasonic scheme. Also, the touch panel 252 may further include a control circuit as well. The touch panel 252 may further include a tactile layer, to provide a tactile response to a user. The (digital) pen sensor 254 may, for example, be a part of the touch panel 252, or include a separate sheet for recognition. The key 256 may, for example, include a physical button, an optical key or a keypad. The ultrasonic input device 258 may sense an ultrasonic wave generated in an input tool, through a microphone (e.g., microphone 288), to confirm data corresponding to the sensed ultrasonic wave.

The display 260 (e.g., the display 160) may include a panel 262, a hologram device 264, a projector 266, a display driver interface (DDI) 268, and/or a control circuit for controlling them. The panel 262 may, for example, be implemented to be flexible, transparent, or wearable. The panel 262 may be constructed as one or more modules together with the touch panel 252. The panel 262 may include a pressure sensor which may measure the strength of pressure of a user's touch. The pressure sensor may be implemented so as to be integrated with the touch panel 252 or may be implemented as one or more sensors separate from the touch panel 252.

The hologram device 264 may show a three-dimensional image to the air using an interference of light. The projector 266 may project light onto a screen, to display an image. The screen may, for example, be located inside or outside the electronic device 201.

The interface 270 may, for example, include an HDMI 272, a USB 274, an optical interface 276 or a D-subminiature (D-sub) 278. The interface 270 may, for example, be included in the communication interface 170 illustrated in FIG. 1A. Additionally or alternatively, the interface 270 may, for example, include a Mobile High-definition Link (MHL) interface, an SD card / Multi Media Card (MMC) interface or an Infrared Data Association (IrDA) standard interface.

The audio module 280 may, for example, convert a sound and an electrical signal interactively. At least some constituent elements of the audio module 280 may be, for example, included in the input output interface 150 illustrated in FIG. 1A. The audio module 280 may for example, process sound information that is inputted or outputted through a speaker 282, a receiver 284, an earphone 286, the microphone 288 or the like.

The camera module 291 is, for example, a device able to photograph a still image and a video. According to an embodiment, the camera module 291 may include one or more image sensors (e.g., front sensor or rear sensor), a lens, an image signal processor (ISP) or a flash (e.g., an LED, a xenon lamp or the like).

The power management module 295 may, for example, manage the electric power of the electronic device 201. According to an embodiment, the power management module 295 may include a power management integrated circuit (PMIC), a charger IC or a battery or fuel gauge. The PMIC may, for example, employ a wired and/or wireless charging scheme. The wireless charging scheme may, for example, include a magnetic resonance scheme, a magnetic induction scheme, an electromagnetic wave scheme or the like. And, the wireless charging scheme may further include a supplementary circuit for wireless charging, for example, a coil loop, a resonance circuit, a rectifier or the like. The battery gauge may, for example, measure a level of the battery 296, a voltage being in charge, an electric current or a temperature.

The battery 296 may, for example, include a rechargeable battery and/or a solar battery.

The indicator 297 may display a specific state, for example, a booting state, a message state, a charging state or the like of the electronic device 201 or a part (e.g., processor 210) of the electronic device 201.

The motor 298 may convert an electrical signal into a mechanical vibration, and may generate a vibration, a haptic effect or the like. The electronic device 201 may, for example, include a mobile TV support device (e.g., GPU) capable of processing media data according to the standards of digital multimedia broadcasting (DMB), digital video broadcasting (DVB), mediaFlo^{™} or the like. Each of the constituent elements described in the present document may consist of one or more components, and a name of the corresponding constituent element may be varied according to the kind of the electronic device. In various embodiments, the electronic device (e.g., electronic device 201) may omit some constituent elements, or further include additional constituent elements, or combine some of the constituent elements to configure one entity, but identically perform functions of corresponding constituent elements before combination.

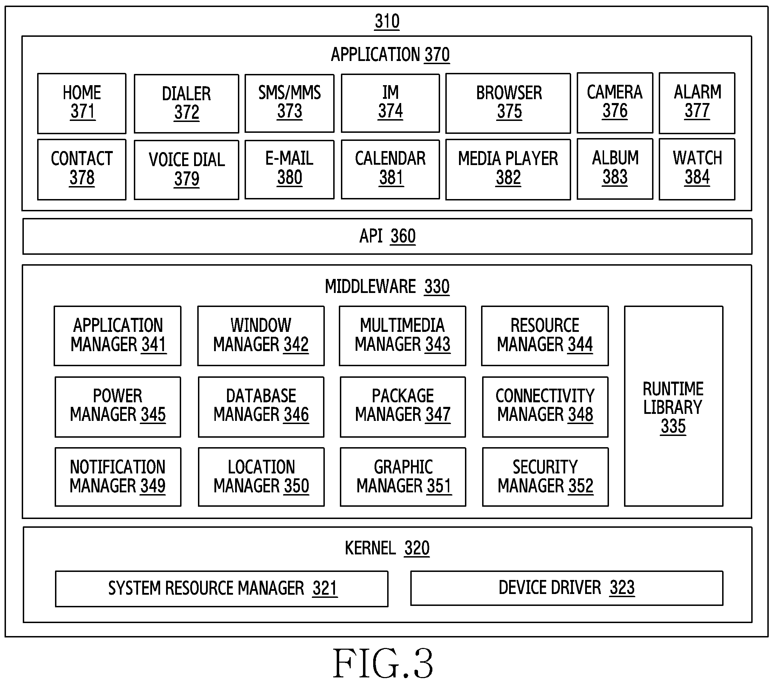

FIG. 3 illustrates a block diagram of a program module according to various embodiments. According to an embodiment, the program module 310 (e.g., the program 140) may include an operating system (OS) controlling resources related to an electronic device (e.g., the electronic device 101) and/or various applications (e.g., the application program 147) run on the operating system. The operating system may, for example, include Android^{™}, iOS^{™}, Windows^{™}, Symbian^{™}, Tizen^{™}, or Bada^{™}.

Referring to FIG. 3, the program module 310 may include a kernel 320 (e.g., the kernel 141), a middleware 330 (e.g., the middleware 143), an API 360 (e.g., the API 145), and/or an application 370 (e.g., the application program 147). At least a part of the program module 310 may be preloaded onto an electronic device, or be downloadable from an external electronic device (e.g., the electronic device 102 or 104, the server 106, etc.).

The kernel 320 may, for example, include a system resource manager 321 and/or a device driver 323. The system resource manager 321 may perform control of a system resource, allocation thereof, or recovery thereof. According to an embodiment, the system resource manager 321 may include a process management unit, a memory management unit, or a file system management unit. The device driver 323 may, for example, include a display driver, a camera driver, a Bluetooth driver, a shared memory driver, a USB driver, a keypad driver, a WiFi driver, an audio driver, or an inter-process communication (IPC) driver.

The middleware 330 may, for example, provide a function that the application 370 needs in common, or provide various functions to the application 370 through the API 360 wherein the application 370 may make use of restricted system resources within an electronic device. According to an embodiment, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may, for example, include a library module that a compiler utilizes so as to add a new function through a programming language while the application 370 is executed. The runtime library 335 may perform input output management, memory management, or arithmetic function processing. The application manager 341 may, for example, manage a lifecycle of the application 370. The window manager 342 may manage a GUI resource which is used for a screen. The multimedia manager 343 may obtain a format used for playing media files, and perform encoding or decoding of the media file by using a codec suitable to the corresponding format. The resource manager 344 may manage a source code of the application 370 or a space of a memory. The power manager 345 may, for example, manage a battery capacity, temperature or power supply, and identify or provide power information used for an operation of an electronic device by using corresponding information among this. According to an embodiment, the power manager 345 may interwork with a basic input / output system (BIOS). The database manager 346 may, for example, provide, search or change a database that will be used in the application 370. The package manager 347 may manage the installing or refining of an application that is distributed in the form of a package file. The connectivity manager 348 may, for example, manage wireless connectivity. The notification manager 349 may, for example, provide an event such as an arrival message, an appointment, a proximity notification, etc. to a user. The location manager 350 may, for example, manage location information of an electronic device. The graphic manager 351 may, for example, manage a graphic effect that will be provided to the user, or a user interface related with this. The security manager 352 may, for example, provide system security or user authentication.

According to an embodiment, the middleware 330 may include a telephony manager for managing a voice or video call function of the electronic device, or a middleware module capable of forming a combination of functions of the aforementioned constituent elements. According to an embodiment, the middleware 330 may provide a module that is specialized by type of an operating system. The middleware 330 may dynamically delete some of the existing constituent elements, or add new constituent elements.

The API 360 is, for example, a set of API programming functions, and may be provided to have another construction according to the operating system. For example, Android or iOS may provide one API set by platform, and Tizen may provide two or more API sets by platform.

The application 370 may, for example, include a home 371, a dialer 372, a short message service (SMS) / multimedia message service (MMS) 373, an instant message (IM) 374, a browser 375, a camera 376, an alarm 377, a contact 378, a voice dial 379, an electronic mail (e-mail) 380, a calendar 381, a media player 382, an album 383, a watch 384, a health care (e.g., measuring a momentum, a blood sugar or the like), or an environment information (e.g., air pressure, humidity, or temperature information) provision application. According to an embodiment, the application 370 may include an information exchange application capable of supporting information exchange between an electronic device and an external electronic device. The information exchange application may, for example, include a notification relay application for relaying specific information to the external electronic device, or a device management application for managing the external electronic device. For example, the notification relay application may relay notification information provided in another application of the electronic device, to the external electronic device, or receive notification information from the external electronic device and provide the received notification information to a user. The device management application may, for example, install, delete, or refine a function (e.g., turned-on / turned-off of the external electronic device itself (or some components) or adjustment of a brightness (or resolution) of a display) of the external electronic device which communicates with the electronic device, or an application which operates in the external electronic device. According to an embodiment, the application 370 may include an application (e.g., a health care application of a mobile medical instrument) designated according to properties of the external electronic device. According to an embodiment, the application 370 may include an application received from the external electronic device. At least a part of the program module 310 may be implemented (e.g., executed) as software, firmware, hardware (e.g., the processor 210), or a combination of at least two or more of them, and may include a module for performing one or more functions, a program, a routine, sets of instructions or a process.

The term "module" used in the document may include a unit consisting of hardware, software or firmware, and may be, for example, used interchangeably with the term "logic", "logic block", "component", "circuitry" or the like. The "module" may be an integrally configured component or the minimum unit performing one or more functions or a part thereof. The "module" may be implemented mechanically or electronically, and may, for example, include an application-specific integrated circuit (ASIC) chip, a field-programmable gate array (FPGA) or a programmable logic device, which has been known or will be developed in future, performing some operations. At least a part of an apparatus (e.g., modules or functions thereof) or method (e.g., operations) according to various embodiments may, for example, be implemented as an instruction which is stored in a computer-readable storage medium (e.g., the memory 130) in the form of a program module. In response to the instruction being executed by a processor (e.g., the processor 120 of FIG. 1A or the processor 210 of FIG. 2), the processor may perform a function corresponding to the instruction. The computer-readable recording medium may include a hard disk, a floppy disk, a magnetic medium (e.g., a magnetic tape), an optical recording medium (e.g., a compact disk - read only memory (CD-ROM), a digital versatile disk (DVD)), a magneto-optical medium (e.g., a floptical disk), an internal memory, etc. The instruction may include a code which is made by a compiler or a code which is executable by an interpreter. The module or program module according to various embodiments may include at least one or more of the aforementioned constituent elements, or omit some of them, or further include another constituent element. Operations carried out by the module, the program module or the another constituent element according to various embodiments may be executed in a sequential, parallel, repeated or heuristic manner, or at least some operations may be executed in different order or may be omitted, or another operation may be added.

An electronic device according to various embodiments of the present disclosure may include: a sensor; and a processor configured to be electrically connected to the sensor. According to one embodiment, the processor may be configured to obtain a first configuration of a content file upon receiving first data indicating the occurrence of pressure having intensity within a first reference range from the sensor and to additionally obtain a second configuration of the content file upon receiving second data indicating the occurrence of pressure having intensity out of the first reference range from the sensor.

According to one embodiment, the content file may include content data, and the processor may be configured to obtain at least a portion of the content data as the first configuration.

According to one embodiment, the content file may include a plurality of pieces of content data, and the processor may be configured to obtain at least one piece of content data among the plurality of pieces of content data as the first configuration.

According to one embodiment, the content file may include at least one piece of additional data, and the processor may be configured to obtain at least a portion of the additional data as the second configuration. For example, the additional data may include metadata.

According to one embodiment, the processor may be configured to control a function of the electronic device by combining the first configuration and the second configuration.

According to one embodiment, the electronic device may further include a display configured to be electrically connected to the processor, and the processor may be configured to output an indicator specifying the first configuration to the display upon receiving the first data and to output an indicator specifying the second configuration to the display upon receiving the second data.

According to one embodiment, the processor may be configured to select a first range of the first configuration on the basis of a first characteristic of the first data and to select a second range of the first configuration on the basis of a second characteristic of the first data.

According to one embodiment, the processor may be configured to select a first range of the second configuration on the basis of a first characteristic of the second data and to select a second range of the second configuration on the basis of a second characteristic of the second data.

According to one embodiment, the electronic device may further include a touch panel configured to be electrically connected to the processor, and the processor may be configured to receive the first data and the second data with a touch input maintained.

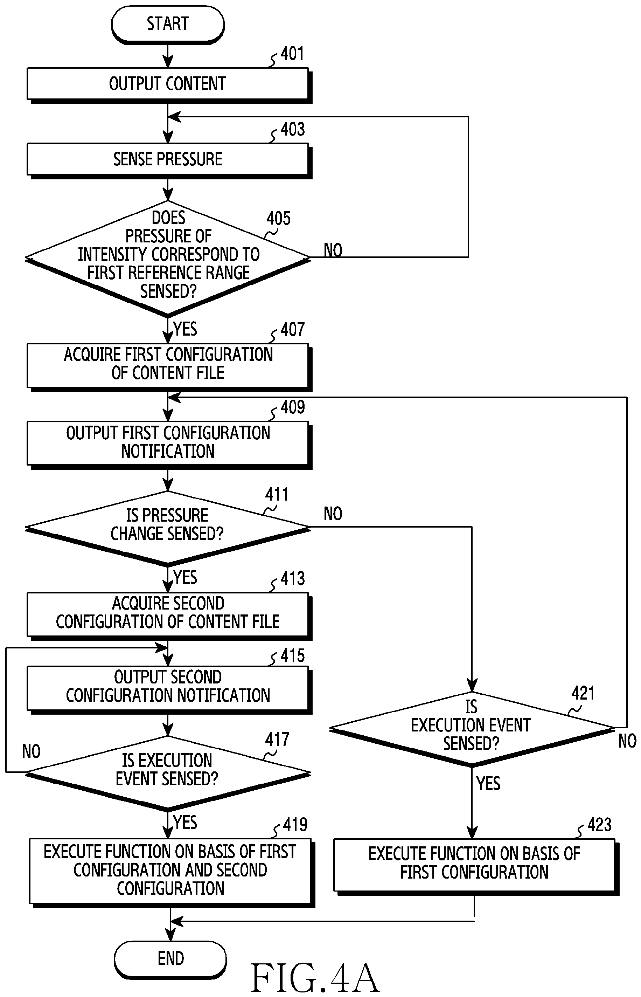

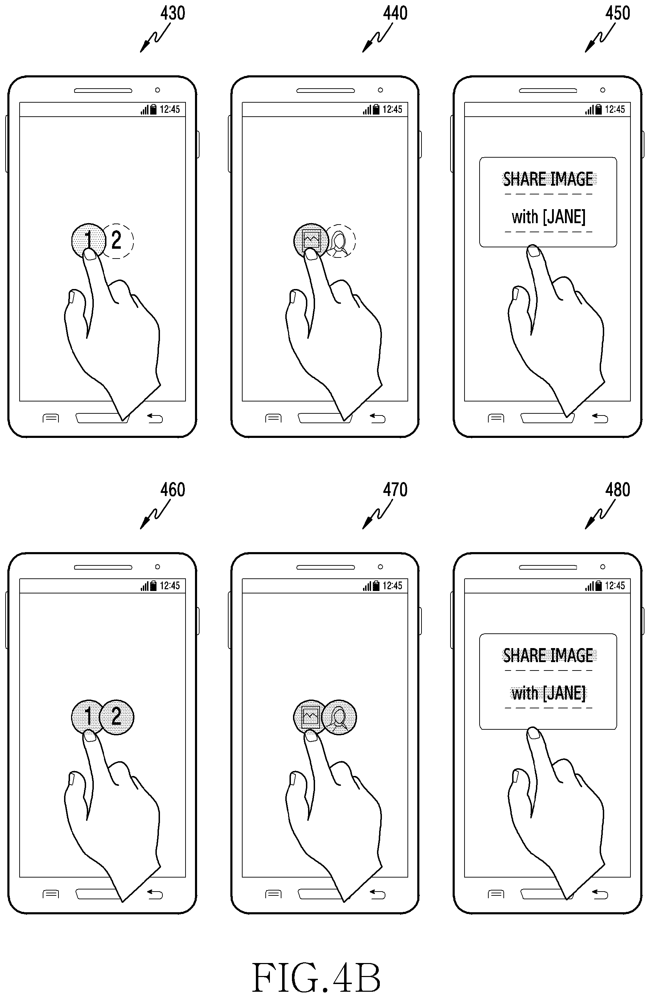

FIG. 4A is a flowchart illustrating a function control operation of an electronic device 101 according to various embodiments of the present disclosure. FIGS. 4B, 5A, 5B, 6A, 6B, 7A, 7B, 8A, and 8B illustrate a function control operation according to various embodiments of the present disclosure. According to one embodiment, the electronic device 101 may be the processor 120 of the electronic device 101.

Referring to FIG. 4A, in operation 401, the electronic device 101 may output a content file (or content). For example, the content file may include two or more different configurations, and the electronic device 101 may process (e.g., decode) at least one configuration and may display the configuration on a screen. For example, one of the different types of configurations may be content data (e.g., image data and video data), and the other may be additional data (e.g., metadata). In addition, the content file may include media data, an application, a widget, and the like.

In operation 403, the electronic device 101 may sense pressure generated by an input. For example, the electronic device 101 may sense pressure by an input to specify at least a portion of the screen on which the content file is displayed. For example, the electronic device 101 may check the intensity of the pressure.

In operation 405, the electronic device 101 may determine whether pressure having intensity corresponding to a first reference range is sensed. For example, the first reference range may be a pressure range for determining an input to obtain a first configuration (e.g., content data) of the content file.

When the pressure having the intensity corresponding to the first reference range is not sensed, the electronic device 101 may perform an operation of sensing pressure. For example, the electronic device 101 may perform an operation associated with operation 403.

When the pressure having the intensity corresponding to the first reference range is sensed, the electronic device 101 may obtain the first configuration of the content file in operation 407. For example, the electronic device 101 may obtain, as the first configuration, at least a portion of content data corresponding to an area where the input is sensed. For example, when the content data is image data, the electronic device 101 may obtain a portion of a screen decoded and displayed as the first configuration.

In operation 409, the electronic device 101 may output a first configuration acquisition notification (e.g., guide information) corresponding to the first configuration of the content file being obtained. For example, the electronic device 101 may output a notification indicating a condition in which the first configuration can be obtained corresponding to the pressure having the intensity corresponding to the first reference range. For example, as shown in FIG. 4B, the electronic device 101 may output 430 a notification using an icon (e.g., a number) associated with a first configuration acquisition condition. The illustration shows a condition in which, although the electronic device 101 may obtain the first configuration or a second configuration corresponding to the intensity of the sensed pressure, the intensity of the current pressure corresponds to the first reference range, and thus the first configuration may be obtained. In another example, the electronic device 101 may output an image-type notification indicating information that can be used for determining an execution function corresponding to the pressure having the intensity corresponding to the first reference range. For example, as shown in FIG. 4B, the electronic device 101 may output 440 a notification indicating that the image data currently displayed on the screen in response to the pressure having the intensity corresponding to the first reference range may be used for determining an execution function. The illustration shows a condition in which, although the electronic device 101 may consider the image data currently displayed corresponding to the intensity of the sensed pressure and user information (e.g., a user name) included in the currently displayed image data in determining an execution function, the intensity of the current pressure corresponds to the first reference range, and thus only the image data is considered in determining an execution function. In still another example, the electronic device 101 may output 450 a text-type notification indicating information (e.g., a shared image) that can be used for determining an execution function corresponding to the pressure having the intensity corresponding to the first reference range. The electronic device 101 may output a first configuration acquisition notification using a visual notification, a tactile notification, an audio notification, or the like.

In operation 411, the electronic device 101 may determine whether a change in pressure intensity is sensed. For example, the electronic device 101 may determine whether the intensity of the pressure is within a second reference range. For example, the second reference range may be a pressure range for determining an input to obtain the second configuration (e.g., additional data) of the content file.

When no change in pressure intensity is sensed, the electronic device 101 may determine whether an execution event is sensed in operation 421. For example, when it is sensed that the input is released with the first configuration acquisition notification output, the electronic device 101 may determine that an execution event for executing a function associated with the first configuration is sensed. In another example, when a predetermined input is sensed with the first configuration acquisition notification output, the electronic device 101 may determine that an execution event for executing a function associated with the first configuration is sensed. For example, the predetermined input may include a gesture input, a voice instruction input, a button input, and the like. In still another example, when it is sensed that the pressure having the intensity corresponding to the first reference range is maintained for a predetermined period of time (e.g., 5 seconds), the electronic device 101 may determine that an execution event for executing a function associated with the first configuration is sensed.

When no execution event is sensed, the electronic device 101 may determine whether an execution event is sensed. For example, the electronic device 101 may perform at least one operation associated with operation 409, operation 411, or operation 421.

When the execution event is sensed, the electronic device 101 may execute at least one function on the basis of the first configuration in operation 423. For example, the electronic device 101 may determine a characteristic of the first configuration and may execute a function associated with the determined characteristic. For example, the characteristics of the first configuration may be defined based on the type of content shown below in Table 1.

**[Table 1]**

| Content type | First configuration | Characteristic |
|---|---|---|
| Web browser | Text | To share |
| Image viewer | Face, phone number | To identify user |
| Media player | Played frame | To store |
| Weather widget | Location information | To provide weather |

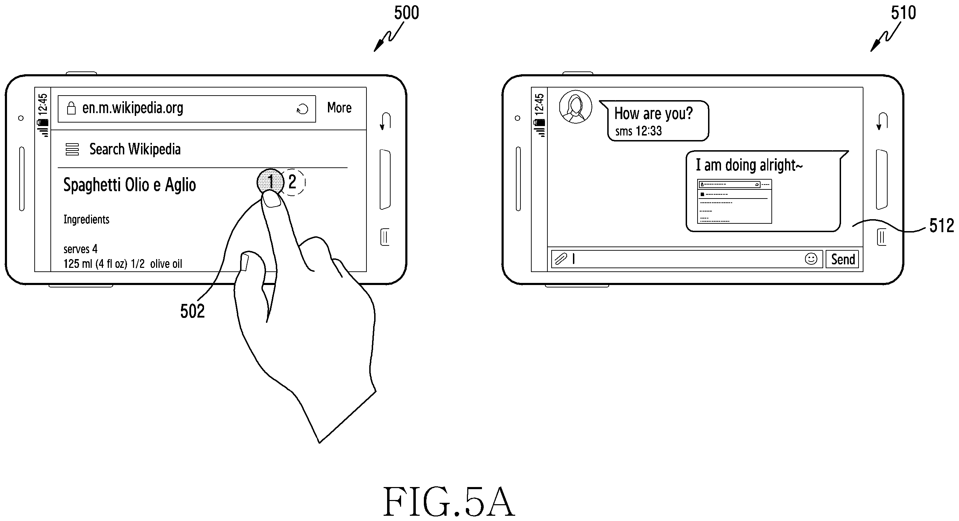

For example, as shown in FIG. 5A, when pressure 502 having intensity corresponding to the first reference range is sensed 500 with a web browser executed, the electronic device 101 may obtain text data from a website displayed on a screen. In this case, the electronic device 101 may determine that at least a portion of the text data obtained by applying the pressure can be shared with another user and may execute 510 at least one function (e.g., a message function and a social networking function) 512 that provides a sharing function. In addition, as illustrated, the electronic device 101 may output a notification indicating a condition in which text data can be obtained or a notification indicating a condition in which a function of sharing text data can be executed corresponding to the pressure having the intensity corresponding to the first reference range. For example, as illustrated, the electronic device 101 may output a notification using numerical information. In addition, the electronic device 101 may also output a notification using image information indicating a condition in which text data can be obtained or a function of sharing text data.

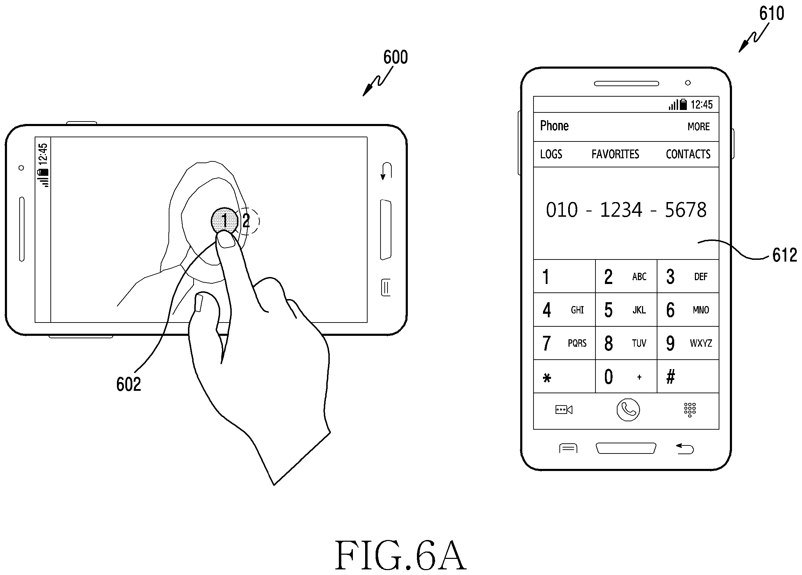

In another example, as shown in FIG. 6A, when pressure 602 having intensity corresponding to the first reference range is sensed 600 with an image viewer executed, the electronic device 101 may obtain a face area from an image displayed on a screen. In this case, the electronic device 101 may determine that a user can be identified using at least a portion of the face area obtained by applying the pressure and may execute 610 at least one function (e.g., an email function, a message function, and a dialing function) 612 that enables connection with the user. In addition, as illustrated, the electronic device 101 may output a notification indicating a condition in which a face area can be obtained from an image or a notification indicating a condition in which a function of enabling connection with a user identified using a face area can be executed corresponding to the pressure having the intensity corresponding to the first reference range.

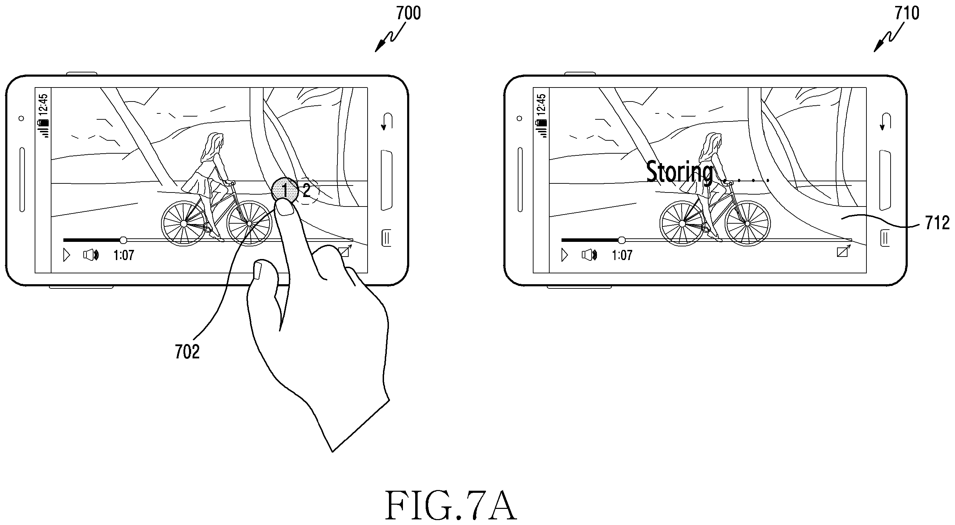

In still another example, as shown in FIG. 7A, when pressure 702 having intensity corresponding to the first reference range is sensed 700 with a video player executed, the electronic device 101 may obtain the currently played image frame. In addition, the electronic device 101 may determine that the image frame obtained by applying the pressure can be stored in the electronic device 101 and may execute 710 at least one function (e.g., a screen-capture function) 712 of storing an image. Further, as illustrated, the electronic device 101 may output a notification indicating a condition in which a currently played image frame can be obtained or a notification indicating a condition in which a function of storing a currently played image frame can be executed corresponding to the pressure having the intensity corresponding to the first reference range.

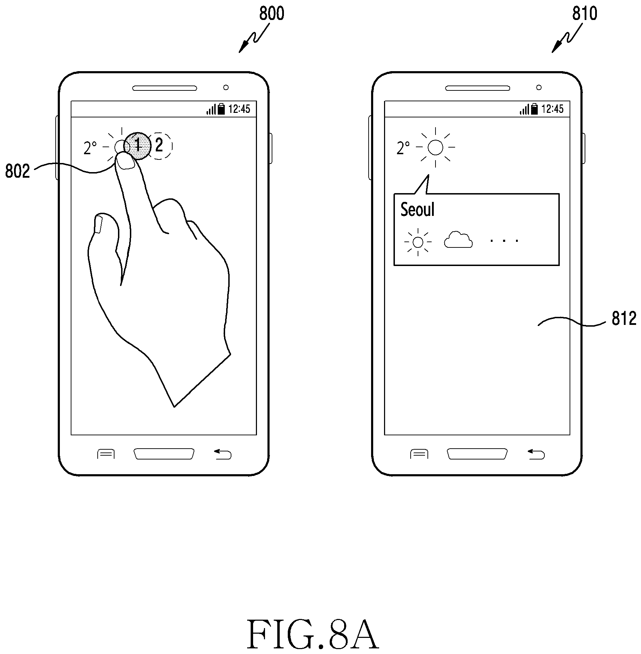

In yet another example, as shown in FIG. 8A, when pressure 802 having intensity corresponding to the first reference range is sensed 800 with a weather widget executed, the electronic device 101 may obtain location information registered in the weather widget. In addition, the electronic device 101 may determine that location information obtained by applying the pressure can be a target area of weather information and may provide 810 weather information 812 corresponding to the area. Further, as illustrated, the electronic device 101 may output a notification indicating a condition in which location information registered in the weather widget can be obtained corresponding to the pressure having the intensity corresponding to the first reference range.

When a change in pressure intensity is sensed, the electronic device 101 may obtain the second configuration of the content file in operation 413. For example, the electronic device 101 may obtain at least a portion of the additional data.

In operation 415, the electronic device 101 may output a second configuration acquisition notification corresponding to the second configuration being obtained. For example, the electronic device 101 may output a notification (e.g., guide information) indicating a condition in which the second configuration may be obtained corresponding to pressure having intensity corresponding to the second reference range. For example, as shown in FIG. 4B, the electronic device 101 may output 460 a notification using an icon (e.g., a number) associated with a second configuration acquisition condition. The illustration shows a condition in which, although the electronic device 101 may obtain the first configuration or the second configuration corresponding to the intensity of the sensed pressure, the intensity of the current pressure corresponds to the second reference range, and thus the first configuration and the second configuration may be obtained. In another example, the electronic device 101 may output an image-type notification indicating information that can be used for determining an execution function corresponding to the pressure having the intensity corresponding to the second reference range. For example, as shown in FIG. 4B, the electronic device 101 may output 470 a notification indicating that the image data currently displayed on the screen in response to the pressure having the intensity corresponding to the second reference range and user information (e.g., a user name) included in the image data may be used for determining an execution function. The illustration shows a condition in which, although the electronic device 101 may consider the image data currently displayed corresponding to the intensity of the sensed pressure and the user information (e.g., a user name) included in the currently displayed image data in determining an execution function, the intensity of the current pressure corresponds to the second reference range, and thus the image data and the user information may be used for determining an executable function. In still another example, as shown in FIG. 4B, the electronic device 101 may output 480 a text-type notification indicating information (e.g., an image shared with JANE) that can be used for determining an execution function corresponding to the pressure having the intensity corresponding to the second reference range.

In operation 417, the electronic device 101 may determine whether an execution event is sensed. For example, when it is sensed that the input is released with the second configuration acquisition notification output, the electronic device 101 may determine that an execution event for executing a function associated with the second configuration is sensed. In another example, when a predetermined input is sensed with the second configuration acquisition notification output, the electronic device 101 may determine that an execution event for executing a function associated with the second configuration is sensed. In still another example, when it is sensed that the pressure having the intensity corresponding to the second reference range is maintained for a predetermined period of time (e.g., 5 seconds), the electronic device 101 may determine that an execution event for executing a function associated with the second configuration is sensed.

When no execution event is sensed, the electronic device 101 may determine whether an execution event is sensed. For example, the electronic device 101 may perform at least one operation associated with operation 415 or operation 417.

When an execution event is sensed, the electronic device 101 may execute at least one function on the basis of the first configuration and the second configuration in operation 419. For example, the electronic device 101 may determine a characteristic of a combination of the obtained first configuration and the obtained second configuration and may execute a function associated with the determined characteristic of the combination. For example, combination characteristics based on the first configuration and the second configuration may be defined based on the type of content shown below in Table 2.

**[Table 2]**

| Content type | First configuration | Second configuration | Combination characteristic s |
|---|---|---|---|
| Web browser | Text | Version information | To share |
| Image viewer | Face, phone number | Location information | To identify user, to record schedule |
| Media player | Played frame | Title | To store |
| Weather widget | Location information | Additional location information | To expand target area |

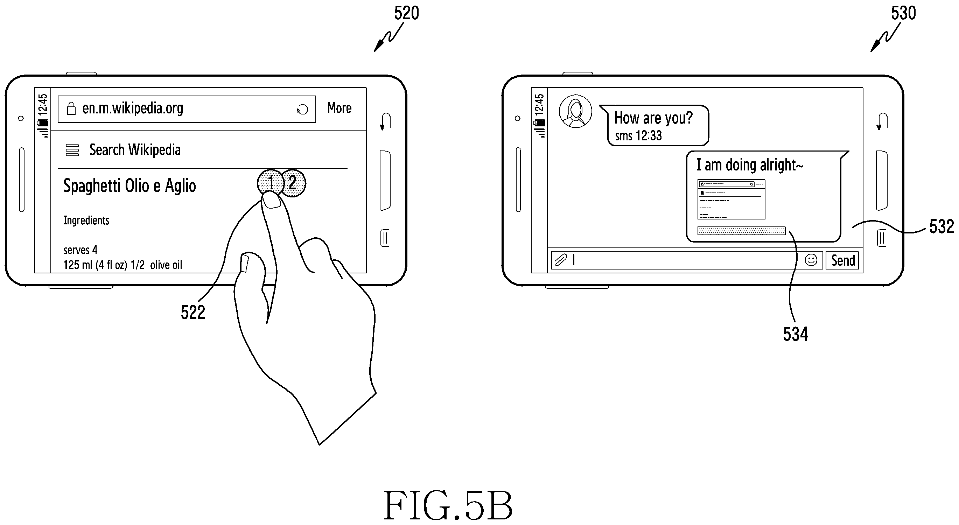

For example, as shown in FIG. 5B, when pressure 522 having intensity corresponding to the second reference range is sensed 520 with a web browser executed, the electronic device 101 may additionally obtain at least a portion of metadata (e.g., site creator information, version information, and website information). In addition, the electronic device 101 may determine that the portion of the metadata, along with text data, can be shared with another user, and may execute 530 at least one function 532 that provides a sharing function. In the illustration, a shaded portion 534 indicates the portion of the additionally obtained metadata. Furthermore, as illustrated, the electronic device 101 may output a notification indicating a condition in which at least a portion of metadata can be obtained or indicating a condition in which a function of sharing at least a portion of metadata can be executed corresponding to the pressure having the intensity corresponding to the second reference range.

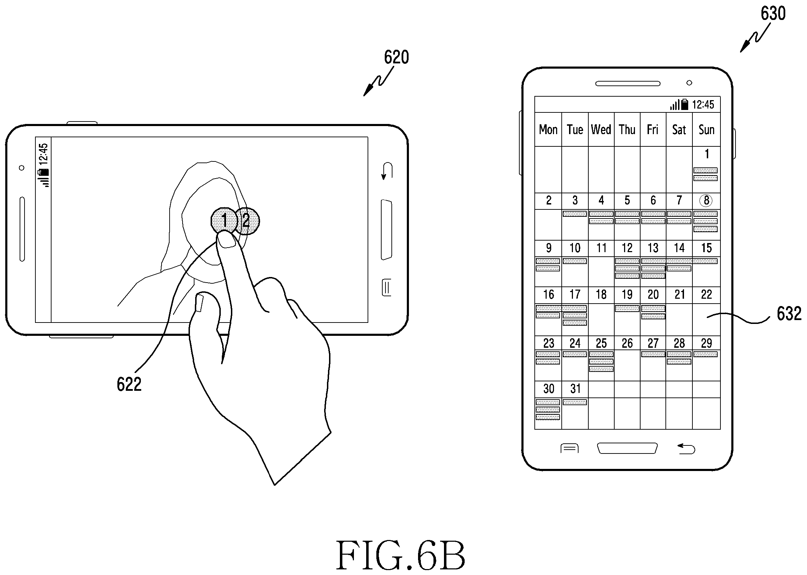

In another example, as shown in FIG. 6B, when pressure 622 having intensity corresponding to the second reference range is sensed 620 with an image viewer executed, the electronic device 101 may additionally obtain at least a portion of metadata (e.g., location information). In addition, the electronic device 101 may determine that a particular user corresponding to a face area and an event occurring in a particular place can be recorded and may execute 630 at least one function (e.g., a memo function, a diary function, and a social networking function) 632 that provides a recoding function. Furthermore, as illustrated, the electronic device 101 may output a notification indicating a condition in which at least a portion of metadata can be obtained or indicating a condition in which a function of recording an event can be executed corresponding to the pressure having the intensity corresponding to the second reference range.

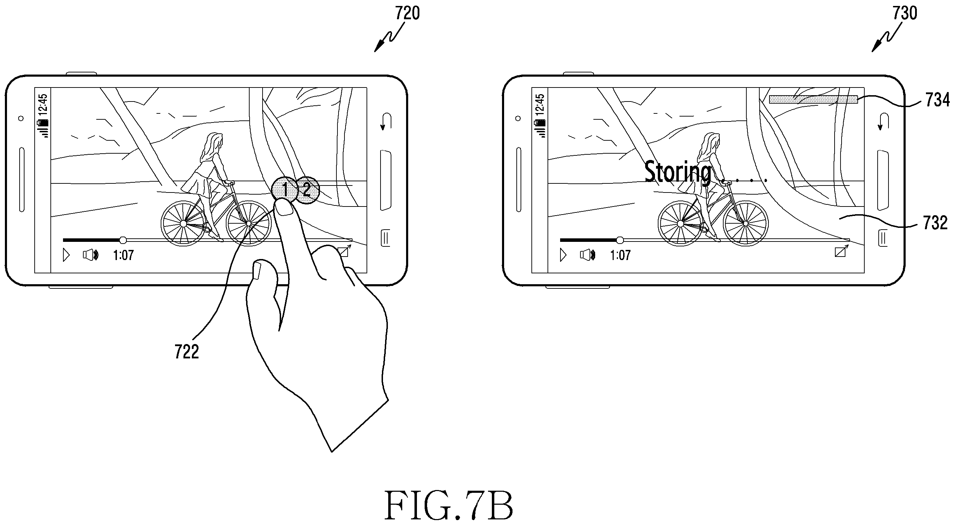

In still another example, as shown in FIG. 7B, when pressure 722 having intensity corresponding to the second reference range is sensed 720 with a video player executed, the electronic device 101 may obtain at least a portion of metadata (e.g., a video title). In addition, the electronic device 101 may determine that the portion of the metadata can be stored along with an obtained image frame and may execute 730 at least one function (e.g., a screen-capture function) 732 of storing an image. In the illustration, a shaded portion 734 indicates the portion of the additionally obtained metadata. Furthermore, as illustrated, the electronic device 101 may output a notification indicating a condition in which at least a portion of metadata can be obtained or indicating a condition in which a function of storing an image frame and at least a portion of metadata can be executed corresponding to the pressure having the intensity corresponding to the second reference range.

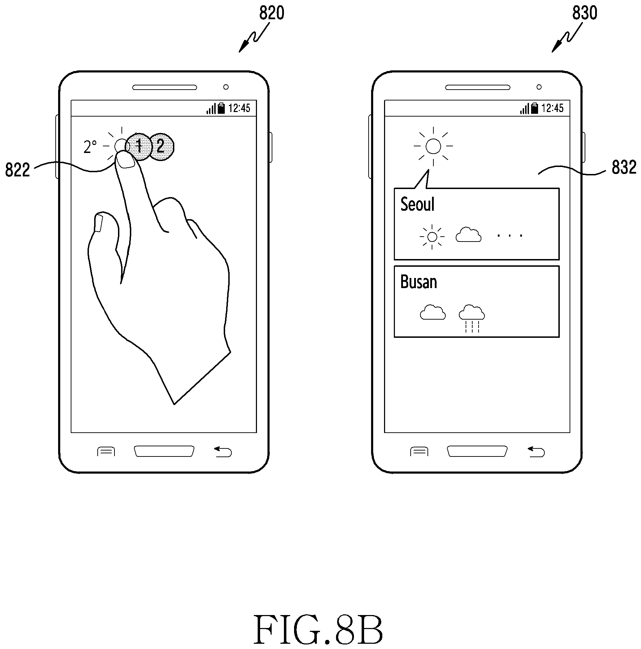

In yet another example, as shown in FIG. 8B, when pressure having intensity corresponding to the second reference range is sensed with a weather widget executed, the electronic device 101 may additionally obtain at least one piece of location information stored in the electronic device 101 or an external device. In addition, the electronic device 101 may determine that the location for which weather information is sought can be extended to the additionally obtained location information and may provide 830 weather information 832 corresponding to an additionally obtained location. Furthermore, the electronic device 101 may output a notification indicating a condition in which at least one piece of location information stored in the electronic device 101 or an external device can be additionally obtained corresponding to the pressure having the intensity corresponding to the second reference range.

According to various embodiments, at least one of operations 401 to 423 may be omitted. For example, at least one of the operation of outputting the first configuration acquisition notification (e.g., operation 409) and the operation of outputting the second configuration acquisition notification (e.g., operation 415) may be omitted.

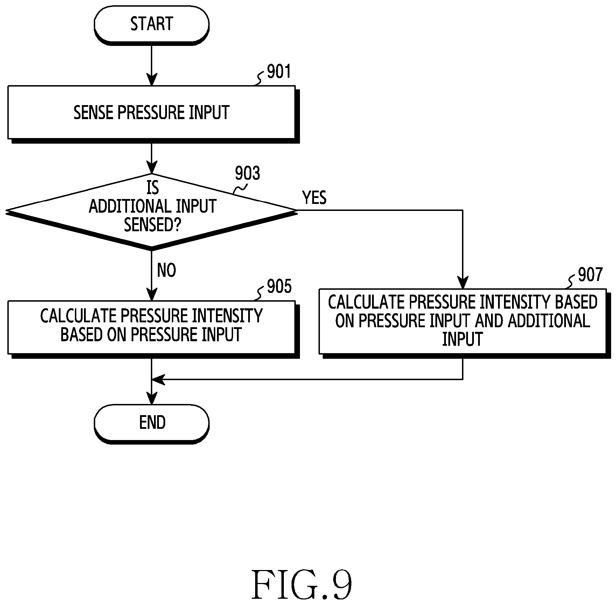

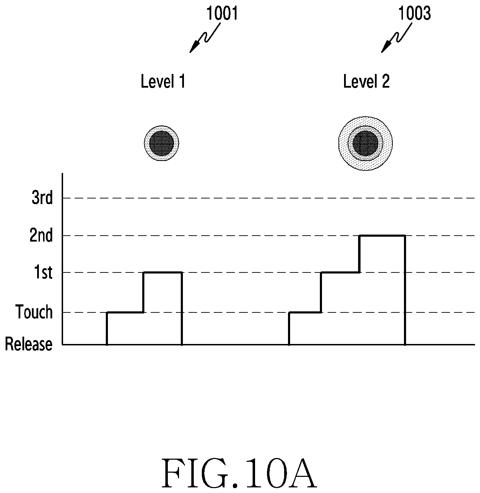

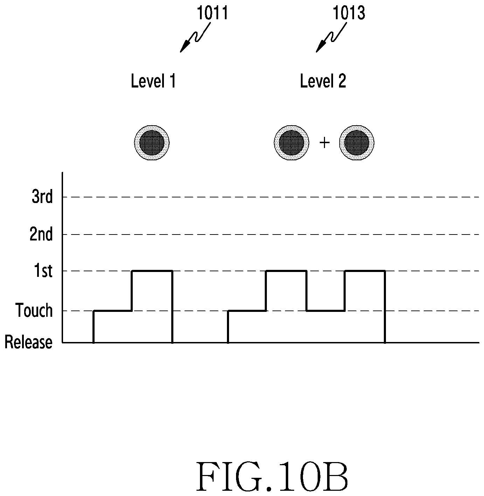

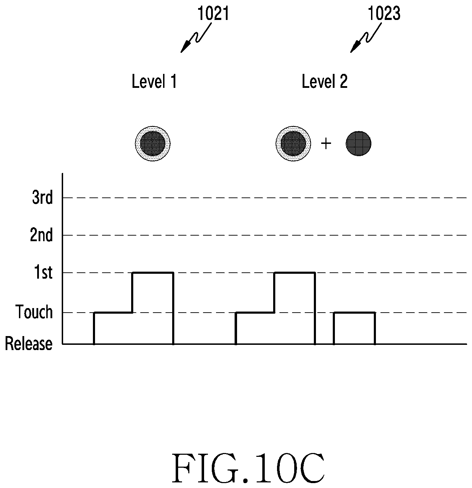

FIG. 9 is a flowchart illustrating a pressure intensity measurement operation of an electronic device 101 according to various embodiments of the present disclosure. FIGS. 10A, 10B, and 10C illustrate a pressure intensity measurement operation according to various embodiments of the present disclosure. According to one embodiment, the electronic device 101 may be the processor 120 of the electronic device 101.

Referring to FIG. 9, in operation 901, the electronic device 101 may sense a pressure input. For example, the pressure input may be a touch input with a pressure or force of a threshold value or greater.

In operation 903, the electronic device 101 may determine whether an additional input is sensed after the pressure input is sensed. For example, the additional input may be an input with pressure that is further added with the pressure input maintained. In another example, the additional input may be another input (e.g., a touch input) that is further added with the pressure input maintained.

When no additional input is sensed, the electronic device 101 may calculate pressure intensity based on the pressure input in operation 905. For example, as shown in FIG. 10A, the electronic device 101 may compare measured pressure intensity with at least one threshold value, thereby calculating the intensity of the pressure input. For example, when sensing a pressure intensity smaller than a first threshold value, the electronic device 101 may calculate 1001 the intensity of the pressure input that is intensity corresponding to a first reference range. In addition, when sensing pressure intensity between the first threshold value and a second threshold value, the electronic device 101 may calculate 1003 the intensity of the pressure input that is intensity corresponding to a second reference range. The electronic device 101 may process an unintended pressure input such that pressure intensity is not calculated. For example, when the time taken to sense pressure intensity satisfying at least one threshold value after sensing pressure intensity satisfying another threshold value does not satisfy a predetermined time, the electronic device 101 may determine that an unintended pressure input is sensed. Thus, the electronic device 101 may perform processing such that the pressure intensity of the unintended pressure input is not compared with at least one threshold value.

When the additional input is sensed, the electronic device 101 may calculate pressure intensity based on the pressure input and the additional input in operation 907. For example, as shown in FIG. 10B, when sensing the pressure input, the electronic device 101 may calculate 1011 intensity corresponding to the first reference range. In addition, when the pressure input is sensed and then additional pressure is applied with the touch maintained, the electronic device 101 may calculate 1013 the intensity of the pressure input that is intensity corresponding to the second reference range. In another example, as shown in FIG. 10C, when sensing the pressure input, the electronic device 101 may calculate 1021 intensity corresponding to the first reference range. In addition, when the pressure input is sensed and then another input (e.g., a touch input or another pressure input) is added, the electronic device 101 may calculate 1023 the intensity of the pressure input that is intensity corresponding to the second reference range.

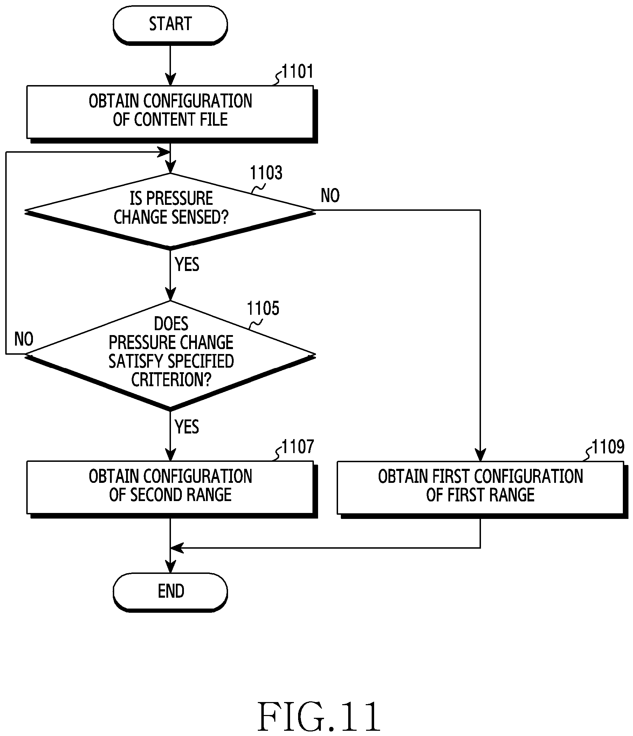

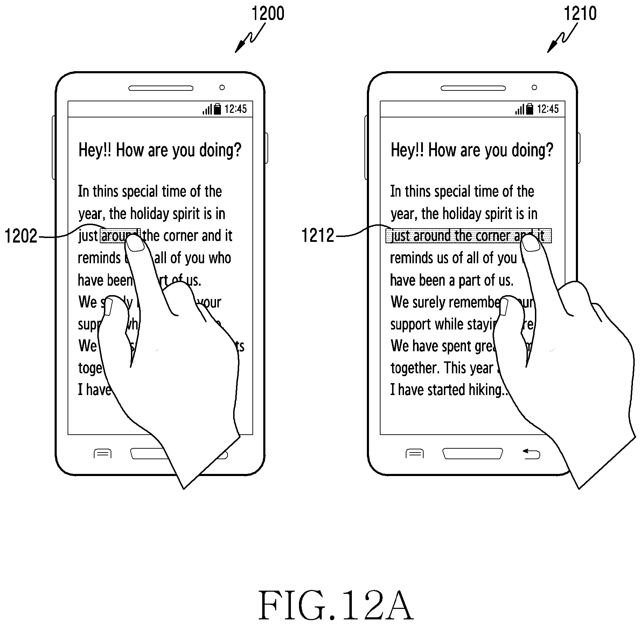

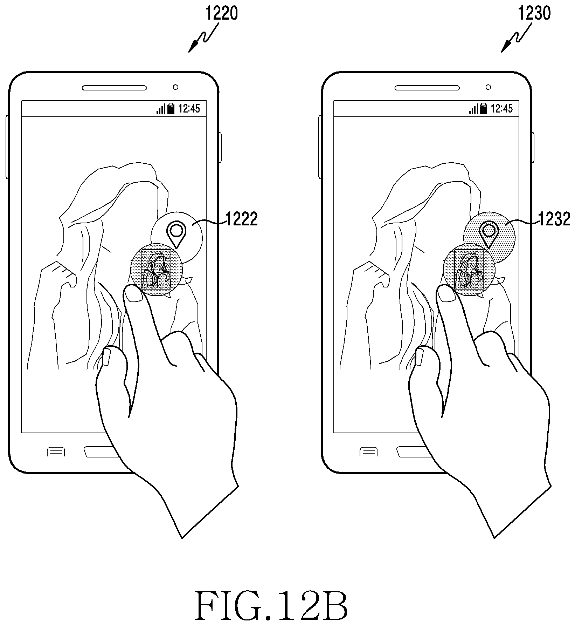

FIG. 11 is a flowchart illustrating an operation of an electronic device 101 obtaining the configuration of a content file according to various embodiments of the present disclosure. FIGS. 12A and 12B illustrate an operation of obtaining the configuration of a content file according to various embodiments of the present disclosure. According to one embodiment, the electronic device 101 may be the processor 120 of the electronic device 101.

Referring to FIG. 11, in operation 1101, the electronic device 101 may perform an operation of obtaining a configuration of a content file corresponding to pressure intensity. For example, the electronic device 101 may obtain a first configuration of the content file when sensing a pressure within a first reference range. In another example, the electronic device 101 may obtain a second configuration of the content file when sensing a pressure within a second reference range.

In operation 1103, the electronic device 101 may sense a change in pressure intensity. For example, the electronic device 101 may determine whether there is a change in pressure intensity while obtaining at least one configuration from the content file.

When no pressure change is sensed, the electronic device 101 may obtain a configuration of a first range in operation 1109. For example, the first range may be associated with at least a portion of a configuration that is desired to be obtained.

When a pressure change is sensed, the electronic device 101 may determine whether the pressure change satisfies a specified criterion in operation 1105. For example, the specified criterion may be a variation in pressure intensity.

When the pressure change does not satisfy the specified criterion, the electronic device 101 may determine whether the pressure change satisfies the specified criterion. For example, the electronic device may perform an operation associated with operation 1103 or an operation associated with operation 1105. Further, when the pressure change does not satisfy the specified criterion, the electronic device 101 may obtain the configuration of the first range in operation 1109. For example, the first range may be associated with at least the portion of the configuration that is desired to be acquired.

When the pressure change satisfies the specified criterion, the electronic device 101 may obtain a configuration of a second range in operation 1107. For example, the second range may be a range wider than the first range. For example, as shown in FIG. 12A, the electronic device 101 may obtain 1200 a first range (e.g., a word) 1202 of a first configuration of a content file (e.g., an electronic book file) or may obtain 1210 a second range (e.g., a sentence) 1212 using the change in pressure intensity. In another example, as shown in FIG. 12B, the electronic device 101 may obtain 1220 a first range (e.g., an image of a photographer) 1222 of a second configuration (e.g., metadata) of a content file (e.g., an image file) or may obtain 1230 a second range (e.g., an image of a photographer and a photographed location) 1232 using the change in pressure intensity. The electronic device 101 may output an indicator indicating a configuration acquisition range corresponding to pressure intensity. For example, the electronic device 101 may output the configuration acquisition range corresponding to the pressure intensity using at least one of a visual indicator, an audio indicator, and a tactile indicator.

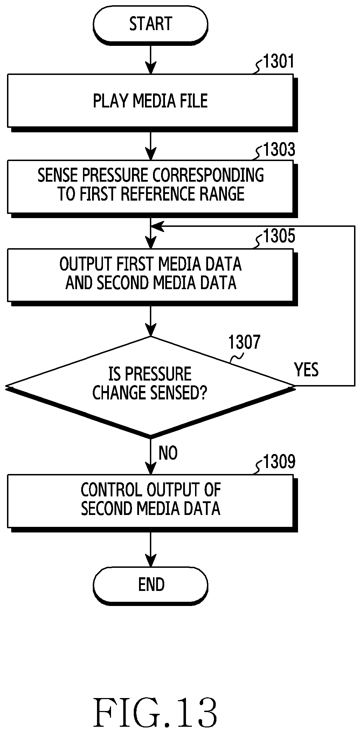

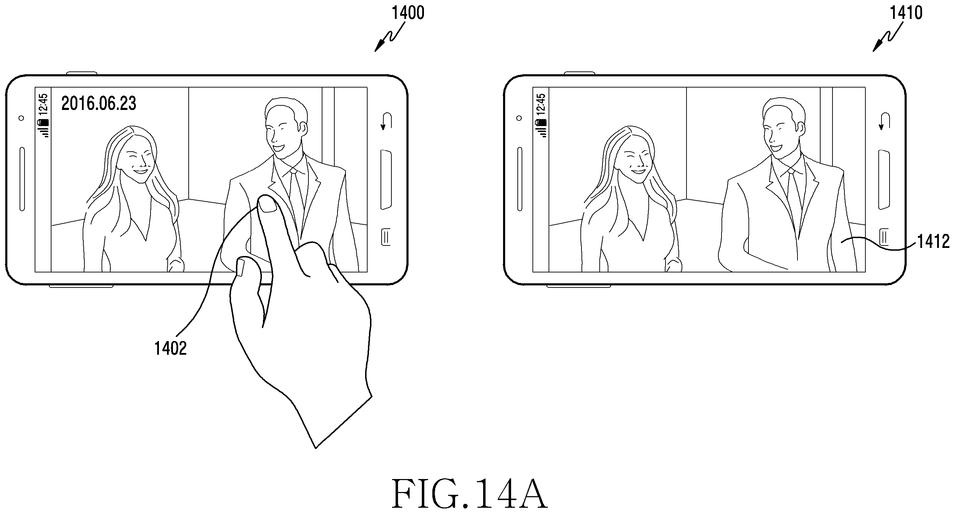

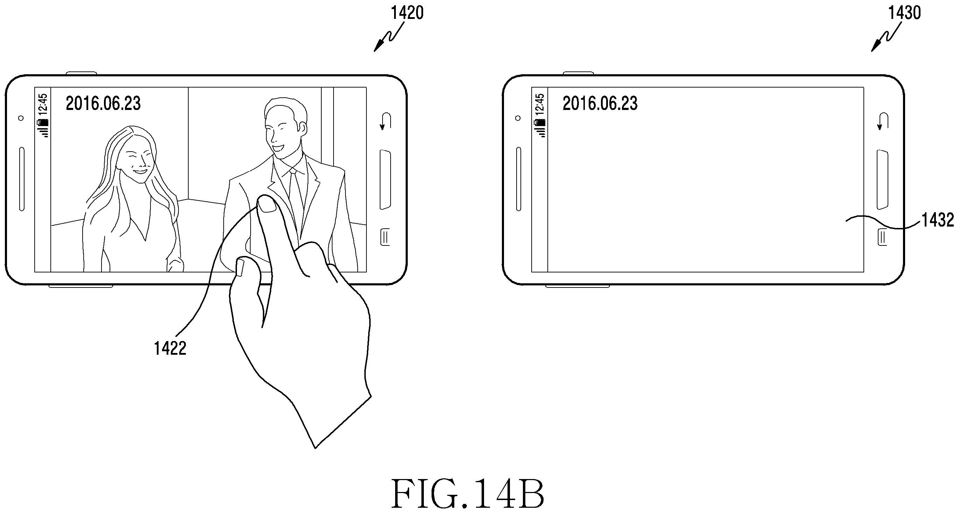

FIG. 13 is a flowchart illustrating a function control operation of an electronic device 101 according to various embodiments of the present disclosure. FIGS. 14A and 14B illustrate a function control operation of an electronic device 101 according to various embodiments of the present disclosure. According to one embodiment, the electronic device 101 may be the processor 120 of the electronic device 101.

Referring to FIG. 13, in operation 1301, the electronic device 101 may play a media file. For example, the electronic device 101 may play a media file including at least two pieces of media data. For example, one of the at least two pieces of media data may be video data, and the other may be text data. The electronic device 101 may play the video data along with the text data. In addition, the media file may further include additional data (e.g., header data) specifying the location of the video data and the location of the text data.

In operation 1303, the electronic device 101 may sense pressure generated by an input. For example, the electronic device 101 may sense pressure having intensity corresponding to a first reference range. For example, the first reference range may be a pressure range for determining an input to simultaneously play first media data (e.g., image data) and second media data (e.g., text data) of the media file.

In operation 1305, the electronic device 101 may output the first media data and the second media data when sensing the pressure corresponding to the first reference range. For example, the electronic device 101 may output the first media data in a first size and may output the second media data in a second size. For example, the electronic device 101 may output the second media data in a pop-up form.

In operation 1307, the electronic device 101 may determine whether a change in pressure intensity is sensed. For example, the electronic device 101 may determine whether the pressure intensity is within a second reference range. For example, the second reference range may be a pressure range for determining an input to control the output of the second media data.

When no change in pressure intensity is sensed, the electronic device 101 may perform an operation of sensing a change in pressure intensity. For example, the electronic device 101 may perform an operation associated with operation 1305 or operation 1307.

When a change in pressure intensity is sensed, the electronic device 101 may control the output of the second media data in operation 1309. For example, as shown in FIG. 14A, when the electronic device 101 senses 1400 pressure 1402 having intensity within the second reference range with the first media data and the second media data output, the electronic device 101 may perform processing 1410 so that the output of the second media data is limited 1412. In another example, as shown in FIG. 14B, when the electronic device 101 senses 1420 pressure 1422 having intensity within the second reference range with the first media data and the second media data output, the electronic device 101 may perform processing 1430 to output 1432 only the second media data

An operating method of an electronic device according to various embodiments of the present disclosure may include: obtaining a first configuration of a content file upon receiving first data indicating occurrence of pressure having intensity within a first reference range from a sensor; and additionally obtaining a second configuration of the content file upon receiving second data indicating occurrence of pressure having intensity out of the first reference range from the sensor.

According to one embodiment, the content file may include content data, and the obtaining of the first configuration may include obtaining at least a portion of the content data as the first configuration.

According to one embodiment, the content file may include a plurality of pieces of content data, and the obtaining of the first configuration may include obtaining at least one piece of content data among the plurality of pieces of content data as the first configuration.

According to one embodiment, the content file may include at least one piece of additional data, and the obtaining of the second configuration may include obtaining at least a portion of the additional data as the second configuration. For example, the additional data may include metadata.

According to one embodiment, the operating method of the electronic device may further include controlling a function of the electronic device by combining the first configuration and the second configuration.

According to one embodiment, the operating method of the electronic device may include outputting an indicator specifying the first configuration upon receiving the first data and outputting an indicator specifying the second configuration upon receiving the second data.

According to one embodiment, the obtaining of the first configuration may further include: selecting a first range of the first configuration on the basis of a first characteristic of the first data; and selecting a second range of the first configuration on the basis of a second characteristic of the first data.

According to one embodiment, the obtaining of the second configuration may further include: selecting a first range of the second configuration on the basis of a first characteristic of the second data; and selecting a second range of the second configuration on the basis of a second characteristic of the second data.

According to one embodiment, the operating method of the electronic device may include receiving the first data and the second data with a touch input maintained.

While the present disclosure has been shown and described with reference to certain embodiments thereof, it will be apparent to those skilled in the art according to the present disclosure is not limited to these embodiments, and various changes in form and details may be made therein without departing from the scope of the present disclosure as defined by the appended claims.

## Claims

1. An electronic device (101) comprising:
a display (260) comprising a panel (262), wherein the panel (262) includes a pressure sensor which is configured to measure the strength of pressure of a user's touch; and
a processor (120) configured to be electrically connected to the display (260),
wherein the processor (120) is configured to:
display (401) a content file on the display of the electronic device;
sense (403) pressure generated by a touch input and check an intensity of the pressure;
in response to the intensity of the pressure within a first reference range, display (409) a first notification associated with acquisition of content data of the content file;
when the touch input is released (421) while the first notification is displayed, execute (423) a first function of the electronic device on the basis of the content data;
in response to the intensity of the pressure within a second reference range, display (415) a second notification associated with acquisition of additional data of the content file;
when the touch input is released (417) while the second notification is displayed, execute (419) a second function associated with the additional data, wherein the second function is determined based on a combination of the content data and the additional data,
wherein the additional data comprises metadata .

2. The electronic device (101) as claimed in claim 1, wherein the content file comprises a plurality of pieces of content data, and
wherein the plurality of pieces of content data includes at least one piece of image data.

3. The electronic device (101) as claimed in claim 1, wherein the processor (120) is configured to sense the pressure with the touch input maintained.

4. An operating method of an electronic device (101), the method comprising:
displaying (401) a content file on a display of the electronic device;
sensing (403) pressure generated by a touch input and check an intensity of the pressure ;
in response to the intensity of the pressure within a first reference range, display (409) a first notification associated with acquisition of content data of the content file;
when the touch input is released (421) while the first notification is displayed, execute (423) a first function of the electronic device on the basis of the content data, ;
in response to the intensity of the pressure within a second reference range, display (415) a second notification associated with acquisition of additional data of the content file ;
when the touch input is released (417) while the second notification is displayed, execute (419) a second function associated with the additional data , wherein the second function is determined based on a combination of the content data and the additional data ,
wherein the additional data comprises metadata.

## Patentansprüche

1. Elektronische Vorrichtung (101), umfassend:
eine Anzeige (260), die ein Feld (262) umfasst, wobei das Feld (262) einen Drucksensor enthält, der dazu konfiguriert ist, die Druckstärke einer Berührung eines Benutzers zu messen; und
einen Prozessor (120), der dazu konfiguriert ist, elektrisch mit der Anzeige (260) verbunden zu sein,
wobei der Prozessor (120) zu Folgendem konfiguriert ist:
Anzeigen (401) einer Inhaltsdatei auf der Anzeige der elektronischen Vorrichtung;
Erfassen (403) von durch eine Berührungseingabe erzeugtem Druck und Überprüfen einer Intensität des Drucks;
als Reaktion darauf, dass die Intensität des Drucks innerhalb eines ersten Referenzbereichs liegt, Anzeigen (409) einer ersten Benachrichtigung, die mit Erlangung von Inhaltsdaten der Inhaltsdatei verknüpft ist;
wenn die Berührungseingabe losgelassen wird (421), während die erste Benachrichtigung angezeigt wird, Ausführen (423) einer ersten Funktion der elektronischen Vorrichtung auf der Grundlage der Inhaltsdaten;
als Reaktion darauf, dass die Intensität des Drucks innerhalb eines zweiten Referenzbereichs liegt, Anzeigen (415) einer zweiten Benachrichtigung, die mit Erlangung zusätzlicher Daten der Inhaltsdatei verknüpft ist;
wenn die Berührungseingabe losgelassen wird (417), während die zweite Benachrichtigung angezeigt wird, Ausführen (419) einer zweiten Funktion, die mit den zusätzlichen Daten verknüpft ist, wobei die zweite Funktion basierend auf einer Kombination der Inhaltsdaten und der zusätzlichen Daten bestimmt wird,
wobei die zusätzlichen Daten Metadaten umfassen.

2. Elektronische Vorrichtung (101) nach Anspruch 1, wobei die Inhaltsdatei eine Vielzahl von Inhaltsdatenelementen umfasst, und
wobei die Vielzahl von Inhaltsdatenelementen mindestens ein Bilddatenelement enthält.

3. Elektronische Vorrichtung (101) nach Anspruch 1, wobei der Prozessor (120) dazu konfiguriert ist, den Druck zu erfassen, während die Berührungseingabe aufrechterhalten wird.

4. Betriebsverfahren einer elektronischen Vorrichtung (101), wobei das Verfahren Folgendes umfasst:
Anzeigen (401) einer Inhaltsdatei auf einer Anzeige der elektronischen Vorrichtung;
Erfassen (403) von durch eine Berührungseingabe erzeugtem Druck und Überprüfen einer Intensität des Drucks;
als Reaktion darauf, dass die Intensität des Drucks innerhalb eines ersten Referenzbereichs liegt, Anzeigen (409) einer ersten Benachrichtigung, die mit Erlangung von Inhaltsdaten der Inhaltsdatei verknüpft ist;
wenn die Berührungseingabe losgelassen wird (421), während die erste Benachrichtigung angezeigt wird, Ausführen (423) einer ersten Funktion der elektronischen Vorrichtung auf der Grundlage der Inhaltsdaten;
als Reaktion darauf, dass die Intensität des Drucks innerhalb eines zweiten Referenzbereichs liegt, Anzeigen (415) einer zweiten Benachrichtigung, die mit Erlangung zusätzlicher Daten der Inhaltsdatei verknüpft ist;
wenn die Berührungseingabe losgelassen wird (417), während die zweite Benachrichtigung angezeigt wird, Ausführen (419) einer zweiten Funktion, die mit den zusätzlichen Daten verknüpft ist, wobei die zweite Funktion basierend auf einer Kombination der Inhaltsdaten und der zusätzlichen Daten bestimmt wird,
wobei die zusätzlichen Daten Metadaten umfassen.

## Revendications

1. Dispositif électronique (101) comprenant :
un affichage (260) comprenant un panneau (262), dans lequel le panneau (262) comprend un capteur de pression qui est configuré pour mesurer la force de pression du toucher d'un utilisateur ; et
un processeur (120) configuré pour être connecté électriquement à l'affichage (260),
dans lequel le processeur (120) est configuré pour :
afficher (401) un fichier de contenu sur l'affichage du dispositif électronique ;
détecter (403) la pression générée par une entrée tactile et vérifier l'intensité de la pression ;
en réponse à l'intensité de la pression dans une première plage de références, afficher (409) une première notification associée à l'acquisition de données de contenu du fichier de contenu ;
lorsque l'entrée tactile est relâchée (421) alors que la première notification est affichée, exécuter (423) une première fonction du dispositif électronique sur la base des données de contenu ;
en réponse à l'intensité de la pression dans une seconde plage de références, afficher (415) une seconde notification associée à l'acquisition de données supplémentaires du fichier de contenu ;
lorsque l'entrée tactile est relâchée (417) alors que la seconde notification est affichée, exécuter (419) une seconde fonction associée aux données supplémentaires, dans lequel la seconde fonction est déterminée sur la base d'une combinaison des données de contenu et des données supplémentaires,
dans lequel les données supplémentaires comprennent des métadonnées.

2. Dispositif électronique (101) selon la revendication 1, dans lequel le fichier de contenu comprend une pluralité d'éléments de données de contenu, et
dans lequel la pluralité d'éléments de données de contenu comprend au moins un élément de données d'image.

3. Dispositif électronique (101) selon la revendication 1, dans lequel le processeur (120) est configuré pour détecter la pression avec l'entrée tactile maintenue.

4. Procédé de fonctionnement d'un dispositif électronique (101), le procédé comprenant :
l'affichage (401) d'un fichier de contenu sur un affichage du dispositif électronique ;
la détection (403) de la pression générée par une entrée tactile et la vérification d'une intensité de la pression ;
en réponse à l'intensité de la pression dans une première plage de références, l'affichage (409) d'une première notification associée à l'acquisition de données de contenu du fichier de contenu ;
lorsque l'entrée tactile est relâchée (421) alors que la première notification est affichée, l'exécution (423) d'une première fonction du dispositif électronique sur la base des données de contenu ;
en réponse à l'intensité de la pression dans une seconde plage de références, l'affichage (415) d'une seconde notification associée à l'acquisition de données supplémentaires du fichier de contenu ;
lorsque l'entrée tactile est relâchée (417) alors que la seconde notification est affichée, l'exécution (419) d'une seconde fonction associée aux données supplémentaires, dans lequel la seconde fonction est déterminée sur la base d'une combinaison des données de contenu et des données supplémentaires,
dans lequel les données supplémentaires comprennent des métadonnées.
